# EUROPÄISCHE PATENTANMELDUNG

(11) **EP 2 455 245 A2**
(43) Veröffentlichungstag der Anmeldung: **23.05.2012**
(21) Anmeldenummer: 12155401.8
(22) Anmeldetag: 28.05.2008
(51) Int. Cl.: B60J 7/00

(54) **Flexible Schutzabdeckung**

(30) Priorität: 18.06.2007 DE 102007029290
(62) Teilanmeldung aus: 08009689.4
(71) Anmelder: BOS GmbH & Co. KG, 73760 Ostfildern (DE)
(72) Erfinder: Stark, Wolfgang, 73770 Denkendorf (DE)
(74) Vertreter: Patentanwälte Ruff, Wilhelm, Beier, Dauster & Partner

(57) **Zusammenfassung**

Die Erfindung betrifft eine Schutzblende (20) für ein Fahrzeug, insbesondere eine Sonnenblende (20) für ein Fahrzeugdach, wobei die Schutzblende (20) als flexibles Flächengebilde (20) und zur Befestigung im Bereich des Fahrzeugdachs (10) oder eines Gepäckstauraums ausgebildet ist.
Erfindungsgemäß weist das flexible Flächengebilde eine erste Schicht auf, die zumindest abschnittsweise elastisch streckbar ausgebildet ist, und eine darüber liegende zweite Schicht, die als UV-Schutzschicht ausgebildet ist. Alternativ weist das flexible Flächengebilde (20) mindestens einen Hauptbereich (20a), vorzugsweise genau einen Hauptbereich (20a), mit geringerer Elastizität und/oder Luftdurchlässigkeit und mindestens einen Nebenbereich (20b) einer ersten Art, vorzugsweise zwei Nebenbereiche (20b) einer ersten Art, mit höherer Elastizität und/oder Luftdurchlässigkeit als der Hauptbereich (20a) auf.

## Beschreibung

### Anwendungsgebiet und Stand der Technik

Die Erfindung betrifft eine Schutzblende für ein Fahrzeug, insbesondere eine Sonnenblende für ein Fahrzeugdach, wobei die Schutzblende als flexibles Flächengebilde und zur Befestigung im Bereich des Fahrzeugdachs oder eines Gepäckstauraums ausgebildet ist. Weiterhin betrifft die Erfindung ein Schutzblendensystem für ein Fahrzeug, insbesondere für ein Fahrzeugdach oder einen Gepäckstauraum, mit zwei in einer Auszugrichtung, vorzugsweise in Fahrzeuglängsrichtung, im Wesentlichen parallel verlaufenden Führungseinrichtungen und einer beidseitig an den Führungseinrichtungen geführten und quer zur Auszugrichtung, vorzugsweise in Fahrzeuglängsrichtung, verschiebbaren Schutzblende.

Als flexibles Flächengebilde ausgebildete Schutzblenden sind allgemein bekannt. Sie finden als Sonnenblenden ausgebildet insbesondere im Bereich eines Fahrzeugdaches bei Fahrzeugen Verwendung, bei denen das Fahrzeugdach zumindest abschnittsweise offen oder transparent gestaltet ist. Zu solchen Fahrzeugen gehören beispielsweise Fahrzeug mit großem Panoramadach, Fahrzeuge mit Targadach und Fahrzeuge mit einem Schiebedach. Als Sonnenblenden ausgebildete gattungsgemäße Schutzblenden sind dabei üblicherweise derart ausgestaltet, dass sie in einen Stauzustand, in dem sie vollständig oder teilweise aus dem Bereich des offenen Fahrzeugdachs herausgeschoben sind, und einem Funktionszustand, in dem sie das Fahrzeugdach bedecken, verschiebbar ausgebildet sind. Im Funktionszustand vermindern als Sonnenblenden ausgebildete gattungsgemäße Schutzblenden die Einstrahlung von Sonnenlicht. So ist beispielsweise bei Fahrzeugen mit Targadach ein offenes Fahrerlebnis möglich, ohne dass die Sonneneinstrahlung ein störendes Maß erreicht. Ebenso finden gattungsgemäße Schutzblenden im Bereich eines Gepäckstauraums eines Fahrzeugs Verwendung, insbesondere bei Kombi-Fahrzeugen. Sie dienen dabei insbesondere als Sichtschutz, um Einblick von außen in den Gepäckstauraum zu verhindern.

Die Führung gattungsgemäßer Schutzblenden erfolgt üblicherweise dadurch, dass die Schutzblenden beidseitig im Fahrzeuginnenraum gehalten werden und in Fahrzeuglängsrichtung verschiebbar sind. Bei Sonnenblenden werden sie beispielsweise im Bereich des Fahrzeugdachs gehalten und erstrecken sich in Fahrzeugquerrichtung über den Fahrgastbereich hinüber. Hierzu sind an gattungsgemäßen Schutzblenden Befestigungsmittel vorgesehen, wie beispielsweise Randabschnitte, die in Führungseinrichtungen geführt werden.

Als nachteilig an den gattungsgemäßen Schutzblenden wird angesehen, dass sie dazu neigen, durch äußere Einflüsse, wie Hitze und Kälte sowie durch die Belastung durch den Fahrtwind und anderweitige mechanische Belastungen, gestreckt und gedehnt zu werden, so dass sie nach einiger Zeit in unattraktiver und die Funktionalität einschränkender Weise in den Fahrzeuginnenraum bzw. den Gepäckraum durchhängen.

Um dieses Problem zu lösen, ist bereits vorgeschlagen worden, zumindest einseitig die Führungsmittel, an denen das flexible Flächengebilde befestigt ist, elastisch auslenkbar zu machen, so dass das flexible Flächengebilde in seiner Gesamtheit in Fahrzeugquerrichtung gespannt wird. Die technische Realisierung ist jedoch teuer und im Hinblick auf die Fehleranfälligkeit noch nicht zufriedenstellend.

### Aufgabe und Lösung

Aufgabe der Erfindung ist daher, eine gattungsgemäße Schutzblende sowie ein Schutzblendensystem mit einer solchen Schutzblende dahingehend weiterzubilden, dass die aus dem Stand der Technik bekannten Nachteile vermieden oder vermindert werden.

Die Aufgabe wird auch dadurch gelöst, dass das flexible Flächengebilde als Gewirke mit mindestens einem Hauptbereich, vorzugsweise genau einem Hauptbereich, mit geringerer Elastizität und/oder Luftdurchlässigkeit und mindestens einem Nebenbereich einer ersten Art, vorzugsweise zwei Nebenbereichen einer ersten Art, mit höherer Elastizität und/oder Luftdurchlässigkeit als der Hauptbereich ausgebildet ist.

Durch die Verwendung eines elastischen Bereichs kann der störende Einfluss externer Einflussfaktoren wie großer Wärme oder mechanischer Belastung durch Fahrtwind reduziert werden. Das Flächengebilde kann sich teilweise elastisch ausdehnen und kehrt nach Wegfall der spezifischen äußeren Einflüsse, beispielsweise sobald sich der Fahrtwind legt, in den ursprünglichen Zustand zurück.

Durch die erfindungsgemäße Gestaltung kann die vorteilhafte Elastizität erzielt werden, ohne dass der Hauptbereich, der den weit überwiegenden Teil der Gesamtfläche des Flächengebildes einnimmt, hierzu aus einem speziellen Material vorgesehen sein muss. Dies gestattet es, das flexible Flächengebilde im Hauptbereich aus einem Material zu fertigen, welches im Hinblick auf den Sonnenschutz und/oder Sichtschutz ideale Eigenschaften aufweist, während nur in den Nebenbereichen der ersten eine Gestaltung des Gewirks genutzt wird, die im Hinblick auf vorteilhafte Elastizität ausgewählt werden. Im Falle einer entsprechend ausgebildeten Sonnenblende im Dachbereich eines Fahrzeugs ist die Anordnung der Nebenbereiche der ersten Art und des Hauptbereichs dabei vorzugsweise so geartet, dass der Hauptbereich oberhalb der Sitzposition der Fahrzeuginsassen angeordnet ist, während sich der mindestens eine Nebenbereich erster Art in Form eines Streifens oder mehrerer Streifen seitlich daran anschließt oder in vollständig versteckter Art und Weise im Randbereich des Fahrzeugdachs vorgesehen ist. Von Vorteil ist auch eine variierende Luftdurchlässigkeit im Hauptbereich und dem Nebenbereich oder den Nebenbereichen. So kann im Falle einer Sonnenblende für ein offenes Dach durch eine erhöhte Luftdurchlässigkeit der Effekt vermindert werden, dass bei hohen Geschwindigkeiten die Sonnenblende ins Fahrzeug eingedrückt oder aus dem Fahrzeug herausgezogen wird und somit eine gedehnte konkave oder konvexe Form einnimmt. Da eine erhöhte Luftdurchlässigkeit im Allgemeinen jedoch auch mit einer erhöhten Lichtdurchlässigkeit und damit einer geringeren Sonnenschutzwirkung einhergeht, ist es von Vorteil, diese erhöhte Luftdurchlässigkeit in den Nebenbereichen vorzusehen, während die Luftdurchlässigkeit im Hauptbereich gering gehalten wird und eine verminderte Priorität verglichen mit der guten Sonnenschutzwirkung im Hauptbereich genießt.

Das flexible Flächengebilde ist erfindungsgemäß als Maschenware oder Webware ausgebildet. Mit einer unterschiedlichen Gewirkstruktur kann bei der Verwendung gleichen Garns im Nebenbereich und im Hauptbereich ein unterschiedliches Verhalten erzielt werden. Insbesondere kann die Verwendung einer Gewirkstruktur mit geringerer Maschendichte und damit größerer Maschen im Nebenbereich erster Art zur Herstellung erhöhter Luftdurchlässigkeit und erhöhter Elastizität dienen. Im Hinblick auf die Elastizität beruht dies darauf, dass größere Maschen eine Verformbarkeit in erhöhtem Maße aufweisen, wobei der Wegfall einer Kraftbeaufschlagung, die beispielsweise durch eine hitzebedingte oder kältebedingte Verformung des Hauptbereichs bewirkt wird, eine Rückkehr der Maschen des Nebenbereichs erster Art in ihre ungestreckte Form zur Folge hat.

Die Ausbildung als Gewirke erlaubt es, das Flächengebilde als einheitliches Bauteil zu gestalten, welches nicht erst durch Zusammenfügung verschiedener Flächenbahnen zusammengefügt werden muss. Die verschiedenen Bereiche des Gewirkes werden bei der Herstellung des Gewirkes durch eine voneinander abweichende Maschendichte hergestellt. Sie bilden gemeinsam ein besonders zuverlässiges und ästhetisch vorteilhaftes einheitliches Flächengebilde.

Erfindungsgemäße Flächengebilde weisen eine Breite in Fahrzeugquerrichtung auf, die im Falle einer Sonnenblende etwa der Breite der abzudeckenden Öffnung entsprechen. So ist eine Sonnenblende zur Abdeckung eines Schiebedachs üblicherweise zwischen 0,6 m und 1,20 m breit, während eine Sonnenblende, die zur Abdeckung eines Panoramadachs vorgesehen ist, je nach Art des Fahrzeugs bis zu 2 m breit oder auch breiter sein kann. Bei einer Gepäckraumabdeckung ist die Breite so zu wählen, dass das Flächengebilde den Gepäckraum überspannen kann. Dies ist üblicherweise mit einer Breite des flexiblen Flächengebildes zwischen 0,9 m und 2 m möglich.

Eine bevorzugte Ausgestaltung des flexiblen Flächengebildes mit verschiedenen Bereichen sieht vor, dass neben den Nebenbereichen erster Art auch mindestens ein Nebenbereich einer zweiten Art, vorzugsweise zwei Nebenbereiche einer zweiten Art, mit gegenüber dem Nebenbereich der ersten Art verringerter Elastizität und/oder Luftdurchlässigkeit vorgesehen sind. Dieser Nebenbereiche zweiter Art stimmen vorzugsweise hinsichtlich der Material- und Gewirkeigenschaften mit dem Hauptbereich überein. Die Nebenbereiche zweiter Art erlauben es, dass flexible Flächengebilde in den Randbereichen aus dichtem, belastbarem Material auszubilden, welches zur Befestigung im Bereich des Fahrzeugdachs oder eines Gepäckstauraums gut geeignet ist.

Bei einer Weiterbildung der Erfindung sind der mindestens eine Hauptbereich und der mindestens eine Nebenbereich der ersten Art sowie vorzugsweise auch der mindestens eine Nebenbereich der zweiten Art als sich in einer Auszugsrichtung, vorzugsweise in der Fahrzeuglängsrichtung, erstreckende Bereiche ausgebildet und quer zur Auszugsrichtung, vorzugsweise in Fahrzeugquerrichtung, nebeneinander angeordnet. Die Auszugsrichtung ist dabei die Richtung, in der die Schutzblende aus ihrem Stauzustand in ihren Funktionszustand bewegt werden kann. Die vorteilhafteste Ausgestaltung sieht dabei vor, dass die Auszugsrichtung die Fahrzeuglängsrichtung ist. Bei einer als Sonnenblende ausgebildeten Schutzblende ist die Sonnenblende vorzugsweise in einem Stauzustand im hinteren Bereich des Fahrzeugdachs oder hinter dem Fahrzeugdach angeordnet und kann zur Überführung in den Funktionszustand nach vorne ausgezogen werden. Durch die Gestaltung mit Hauptbereich und Nebenbereichen, die nebeneinander angeordnet sind, kann bei einer Sonnenblende in besonders vorteilhafter Art und Weise gewährleistet werden, dass der Hauptbereich im Funktionszustand und bei der Überführung in den Funktionszustand über den Plätzen der Fahrgäste angeordnet ist.

Bei einer Weiterbildung der Erfindung weist das flexible Flächengebilde drei Bereiche auf, die in der Auszugsrichtung, vorzugsweise in der Fahrzeugquerrichtung, nebeneinander angeordnet sind, wobei die zwei äußeren Bereiche Nebenbereiche erster Art sind und der innere Bereich der Hauptbereich ist. Dabei sind bei einer Auszugsrichtung, die der Fahrzeuglängsrichtung entspricht, die Nebenbereiche links- und rechtsseitig vorgesehen sind. Der Hauptbereich ist mittig dazwischen vorgesehen. Beim Überführen einer solchen Schutzblende aus ihrem Stauzustand in ihren Funktionszustand befinden sich die Nebenbereiche somit stets an der linken und rechten Außenseite. Im Falle einer Sonnenblende befinden sich die Nebenbereiche erster Art dadurch stets im Bereich der Fahrzeugsäulen, so dass gegebenenfalls durch diese Nebenbereiche in erhöhtem Maße durchscheinendes Sonnenlicht nur bei ungünstiger Einstrahlrichtung die Fahrgäste trifft.

Bei einer Alternative hierzu weist das flexible Flächengebilde fünf Bereiche auf, die quer zur Auszugsrichtung, vorzugsweise in Fahrzeugquerrichtung, nebeneinander angeordnet sind, wobei der mittlere Bereich der Hauptbereich ist, wobei die äußeren Bereich Nebenbereiche der zweiten Art sind und wobei die zwischen den äußeren Bereichen und dem mittleren Bereich liegenden Bereiche Nebenbereiche der ersten Art sind. Diese Ausgestaltung erlaubt es, die Nebenbereiche zweiter Art, die den äußeren Rand des flexiblen Flächengebildes bilden, zur sicheren Befestigung am Fahrzeug zu verwenden, beispielsweise jeweils eingeführt in Führungsschienen. Die sich innenseitig daran angrenzenden Nebenbereiche erster Art sind zur Herstellung der Elastizität und/oder Luftdurchlässigkeit zuständig. Der überwiegende Flächenanteil des Flächengebildes wird durch den Hauptbereich eingenommen, der zwischen den Nebenbereichen der ersten Art angeordnet ist. Diese Ausgestaltung bietet die Vorteile der vorstehend beschriebenen Ausgestaltung mit drei Bereichen und bietet zusätzlich eine verbesserte Möglichkeit der Befestigung des flexiblen Flächengebildes.

Besonders vorteilhaft ist es, wenn das flexible Flächengebilde zumindest im Nebenbereich erster Art aus gegen UV-Strahlung resistentem Garn hergestellt ist oder mit einer UV-Strahlung abweisenden Beschichtung versehen ist. Eine derartige Gestaltung verhindert, dass der elastische Bereich durch fortwährende Sonnenbestrahlung seine elastischen Eigenschaften einbüßt.

Von der Erfindung ist auch ein Schutzblendensystem für ein Fahrzeug, insbesondere für ein Fahrzeugdach oder einen Gepäckstauraum, umfasst mit zwei in einer Auszugsrichtung, vorzugsweise einer Fahrzeuglängsrichtung, im Wesentlichen parallel verlaufenden Führungseinrichtungen und einer beidseitig an den Führungseinrichtungen geführten und in Auszugsrichtung, vorzugsweise in Fahrzeuglängsrichtung verschiebbaren Schutzblende, wobei die Schutzblende nach oben beschriebener Art ausgebildet ist.

Dabei ist es besonders bevorzugt, dass im Bereich der Führungseinrichtung starre Abdeckabschnitte oberhalb und/oder unterhalb des flexiblen Flächengebildes vorgesehen sind, die sich über bzw. unter das Flächengebilde zumindest in einem Funktionszustand des Sonnenblendensystems erstrecken. Derartige Abdeckabschnitte erlauben es, eine Schutzblende mit einem Hauptbereich und Nebenbereichen zu verwenden, wobei im Falle einer Sonnenblende durch die Abdeckflächen verhindert wird, dass Sonnenlicht durch die Nebenbereiche, insbesondere die Nebenbereiche erster Art, hindurch bis in den Bereich der Fahrgäste gelangen kann. Hierdurch wird es möglich, in den Nebenbereichen, insbesondere den Nebenbereichen erster Art, das flexible Flächengebilde so auszubilden, dass es im Hinblick auf seine Luftdurchlässigkeit und Elastizität optimiert ist, wobei keine Rücksicht darauf genommen werden muss, dass diese Nebenbereiche auch im Hinblick auf die Schutzwirkung gegen Sonneneinstrahlung vorteilhaft sind. So kann insbesondere grobmaschiges textiles Material in den Nebenbereichen erster Art Verwendung finden, welches durch seine Grobmaschigkeit eine hohe Luftdurchlässigkeit und die gewünschte Elastizität bietet. Besonders von Vorteil ist es dafür, wenn die Abdeckflächen sich zumindest im Funktionszustand über die Nebenbereiche des flexiblen Flächengebildes erstrecken und den Hauptbereich zumindest im Wesentlichen unbedeckt lassen.

Eine vorteilhafte Ausgestaltung des Schutzblendensystems sieht vor, dass eine sich quer zur Auszugsrichtung, insbesondere in Fahrzeugquerrichtung erstreckende Rollowelle zur Aufnahme der Schutzblende in einem partiellen oder vollständigen Stauzustand vorgesehen ist. Hierdurch wird ein besonders platzsparender Stauzustand erreicht, so dass beispielsweise eine als Sonnenblende ausgebildete Schutzblende nicht in störender Art und Weise in ihrer Stauposition zu einer ungewollten Beschattung des Fahrzeuginnenraums führt oder den Blick durch die Heckscheibe hindurch behindert.

### Kurzbeschreibung der Zeichnungen

Weitere Vorteile und Merkmale der Erfindung ergeben sich aus den Ansprüchen sowie der nachfolgenden Beschreibung von bevorzugten Ausführungsbeispielen der Erfindung, die anhand der Zeichnungen dargestellt sind. Dabei zeigt:
- Fig. 1: ein Dachbereich eines Fahrzeugs mit einem erfindungsgemäßen Sonnenblendensystem,
- Fig. 2: eine detailliertere Darstellung eines Abschnitts des Sonnenblendensystem, das in Fig. 1 dargestellt ist, und
- Fig.3: einen Abschnitt einer zweiten Ausführungsform eines erfindungsgemäßen Sonnenblendensystems.

### Detaillierte Beschreibung der Ausführungsbeispiele

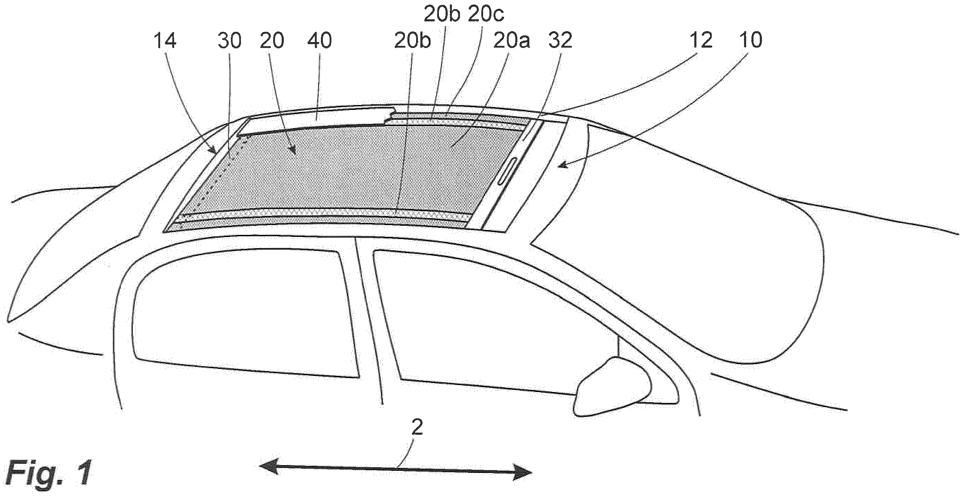

Fig. 1 zeigt ein erfindungsgemäßes Sonnenblendensystem in seiner bestimmungsgemäßen Einbausituation. Das Sonnenblendensystem 14 ist im Dachbereich eines Fahrzeugs vorgesehen. Das Dach 10 dieses Fahrzeugs weist eine annähernd die vollständige Länge und die vollständige Breite des Dachs 10 einnehmende Panoramaöffnung 12 auf. Diese Panoramaöffnung 12 ist in nicht näher dargestellter Art und Weise durch eine transparente Glasscheibe abgedeckt, die mit der Außenkarosserie im Dachbereich bündig abschließt. In der Panoramaöffnu7ng 12 ist eine Sonnenblende 20 angeordnet, die als flexibles Flächengebilde 20 mit fünf voneinander getrennten Bereichen 20a, 20b, 20c vorgesehen ist. Ein mittlerer Hauptbereich 20a nimmt dabei etwa 70% der Gesamtfläche ein. An diesen Hauptbereich 20a schließen sich bezogen auf die Fahrzeuglängsrichtung 2 beidseitig seitlich angeordnet jeweils Nebenbereiche 20b erster Art an. Hieran wiederum schließen sich streifenförmige Nebenbereiche 20c zweiter Art an.

Das flexible Flächengebilde 20 mit den Bereichen 20a, 20b, 20c weist eine durchgehende Gewirkestruktur auf, die in einem einheitlichen Vorgang herstellbar ist. So ist es möglich, das Flächengebilde 20 mit bereichsweise variierenden Eigenschaften, insbesondere mit variierender Elastizität, zu gestalten, ohne dass hierfür die einzelnen Bereiche separate gefertigt und nachfolgend miteinander verbunden werden müssen. Die Gestaltung als zusammenhängender Gewirkverbund führt zu einer besonders guten Qualität und einem ästhetisch ansprechenden Aussehen.

Die Sonnenblende 20 ist auf einer Rollowelle 30 aufrollbar, die sich am hinteren Ende der Panoramaöffnung 12 oberhalb einer Rückbank des Fahrzeugs befindet. An der der Rollowelle abgewandten Seite der Sonnenblende 20 ist ein formstabiles Abschlussteil 32 vorgesehen, welches sich annähernd über die vollständige Breite der Sonnenblende 20 erstreckt und mit dieser fest verbunden ist.

Über den Nebenbereichen 20b, 20c sind Abdeckabschnitte 40 vorgesehen, wobei in der Darstellung der Fig. 1 lediglich der linksseitige Abdeckabschnitt in geschnittener Form dargestellt ist. Der rechte Abdeckabschnitt ist zum besseren Verständnis ausgeblendet.

Die Abdeckabschnitte 40 sind fahrzeugfest und unterhalb der nicht dargestellten Panoramascheibe in der Panoramaöffnung 12 vorgesehen. Sie erstrecken sich über die komplette Länge der Panoramaöffnung 12. In Fahrzeugquerrichtung erstrecken sie sich von den äußeren Rändern der Panoramaöffnung 12 so weit in Richtung der Fahrzeugmitte hinein, dass sie die Nebenbereiche 20b, 20c vollständig abdecken, den Hauptbereich 20a der Sonnenblende 20 jedoch weitgehend unbedeckt lassen.

Die Funktionsweise des dargestellten Sonnenblendensystems wird im Folgenden beschrieben. Ausgehend von einer vollständigen Staulage, in der die Sonnenblende 20 vollständig auf der Rollowelle 30 aufgerollt ist, kann die Sonnenblende 20 anhand des formstabilen Abschlussteils 32 am vorderen Ende der Sonnenblende 20 manuell oder mittels eines Motors in Fahrzeuglängsrichtung nach vorne gezogen werden, wobei die Sonnenblende 20 von der Rollowelle 30 abgerollt wird. Die Sonnenblende 20 wird dabei im Randbereich der Nebenbereiche 20c zweiter Art seitlich geführt. Durch die Abdeckabschnitte 40 wird gewährleistet, dass im Funktionszustand, der in der Fig. 1 dargestellt ist, Sonnenlicht stets nur auf den Hauptbereich 20a der Sonnenblende 20 treffen kann, nicht jedoch auf die lichtdurchlässigen Nebenbereiche 20b.

Die Nebenbereiche 20b erster Art und der Hauptbereich 20a der Sonnenblende 20 unterscheiden sich hinsichtlich ihrer textilen Gestaltung. Im Hauptbereich 20a ist das Gewirk dicht und unelastisch, während in den Nebenbereichen 20b erster Art ein grobmaschigeres Gewirk Verwendung findet, welches elastisch streckbar ist und eine hohe Luftdurchlässigkeit gewährleistet. Die Nebenbereiche 20c zweiter Art stimmen bezüglich ihrer textilen Gestaltung mit dem Hauptbereich 20a überein. Die Ausgestaltung des Flächengebildes als Gewirk ermöglicht in besonders vorteilhafter Art und Weise diese unterschiedliche Gestaltung der verschiedenen Bereiche. So können in den Nebenbereichen 20b erster Art beispielsweise Maschen ausgelassen sein, um die Maschendichte zu verringern. Diese Gestaltung der Sonnenblende 20 mit verschiedenen Bereichen mit unterschiedlichen textilen Eigenschaften führt dazu, dass die Sonnenblende 20 auch nach jahrelangem Gebrauch nicht in der Mitte durchhängt, da durch die elastische Dehnbarkeit der Nebenbereiche 20b erster Art kurzzeitige Streckbelastungen nicht zu einer unerwünschten plastischen Verformung der Sonnenblende 20 führen. Darüber hinaus wird durch die Luftdurchlässigkeit der Nebenbereiche 20b gewährleistet, dass auch bei hohen Geschwindigkeiten ein Luftaustausch zwischen dem Innenbereich des Fahrzeugs und der Umgebung möglich ist, so dass die Sonnenblende bei Fahrzeugen mit offener Panoramaöffnung nicht aufgrund permanenter Druckunterschiede in das Fahrzeug hineingedrückt wird oder aus dem Fahrzeug herausgesogen wird. Die Luftdurchlässigkeit ist durch die grobmaschigen Nebenbereiche 20b sowie einen Abstand zwischen den Abdeckabschnitten 40 und der Sonnenblende 20 gewährleistet. Durch die Nebenbereiche 20c zweiter Art ist eine sichere Führung und Befestigung der Sonnenblende 20 im Randbereich möglich.

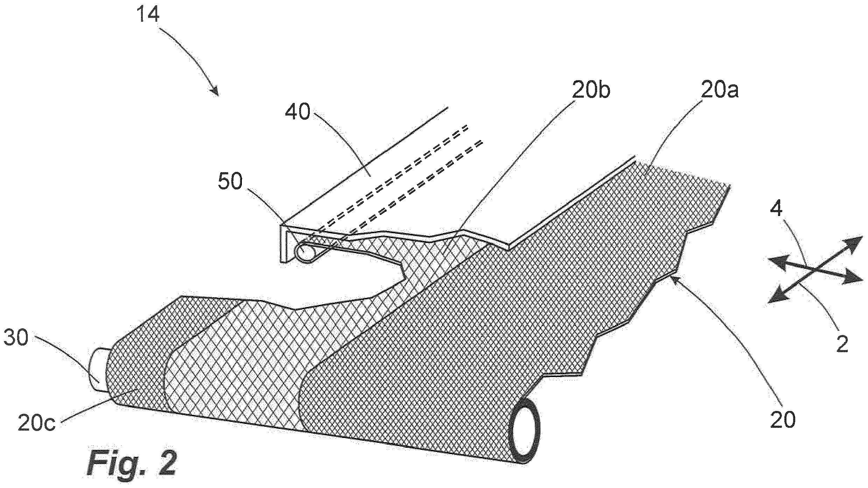

Fig. 2 zeigt einen Teil des in Fig. 1 dargestellten Sonnenblendensystems in einer vergrößerten Darstellung. Es handelt sich um einen Abschnitt des symmetrisch ausgebildeten Sonnenblendensystems 14, der in der linken Seite im Heckbereich des Fahrzeugdachs angeordnet ist.

Zu erkennen ist, dass die Sonnenblende 20 mit ihrem Hauptbereich 20a und dem einen dargestellten Nebenbereich 20b erster Art sowie dem dargestellten Nebenbereich 20c partiell auf der Rollowelle 30 aufgerollt ist. Beim Abrollen der Sonnenblende 20 von der Rollowelle 30 wird der sich an den Nebenbereich 20b erster Art anschließende Nebenbereich 20c zweiter Art kontinuierlich um ein Führungselement 50 in Form einer Führungsstange 50 gelegt und entlang dieser Führungsstange 50 weiter nach vorne geführt. Es ist weiterhin zu erkennen, dass die Abdeckabschnitte 40 sowohl die Führungsstange 50 als auch die Nebenbereiche 20b, 20c der Sonnenblende 20 vollständig überspannen. Um einen Luftaustausch zwischen dem Fahrzeuginnenraum und der Umgebung zu gewährleisten, ist allerdings ein Abstand zwischen der Oberfläche der Nebenabschnitte 20b und dem Abdeckabschnitt 40 vorgesehen.

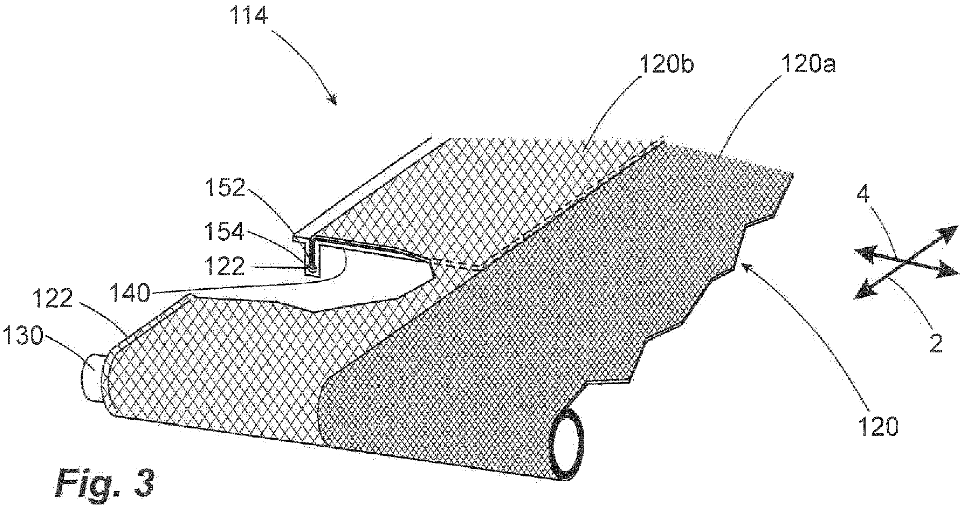

Fig. 3 zeigt eine alternative Ausgestaltung eines Sonnenblendensystems, wobei, wie bei der Fig. 2, nur ein Ausschnitt aus dem linksseitigen Heckbereich der Sonnenblendensystems 114 dargestellt ist. Abweichend von der Ausführungsform der Fig. 2 sind bei dieser alternativen Ausführungsform die Führungseinrichtung zur Führung der Sonnenblende 120 und der Abdeckabschnitt 140 als ein Bauteil ausgebildet. Die Gestaltung sieht vor, dass sich außenseitig an einen Abdeckabschnitt 140 eine nach oben offene Nut 152 anschließt, die in ihrem Nutgrund eine Aufweitung 154 aufweist. Abweichend von der Ausführungsform der Fig. 1 und 2 ist die Sonnenblende 120 wiederum als einheitliches Gewirk aufgebaut, weist jedoch neben dem Hauptbereich 120a lediglich Nebenbereiche 120b erster Art auf, welche damit auch den äußeren Rand der Sonnenblende 20 bilden. Im Bereich dieser Nebenbereiche 120b ist jeweils eine Verdickung 122 vorgesehen, die so bemessen ist, dass sie in die Aufweitung 154 einführbar ist, nicht jedoch durch den oberen Abschnitt der Nut 152 hindurch passt. Beim Abrollen der Sonnenblende 120 von der Rollowelle 130 werden in nicht näher dargestellter Art und Weise die Verdickungen 122 beidseitig der Sonnenblende 120 in die Aufweitung 154 der Nut 152 sowie die korrespondierende Nut auf der anderen Seite der Sonnenblende eingeführt, so dass die Sonnenblende beidseitig sicher geführt ist.

Abweichend von der Ausführungsform der Fig. 1 und 2 sind die Abdeckabschnitte 140 nicht oberhalb der Nebenbereiche 120b vorgesehen, sondern liegen unterhalb der Nebenbereiche 120b. Des Weiteren liegen die Nebenbereiche 120b der Sonnenblende 120 auf den Abdeckabschnitten 140 unmittelbar auf, so dass ein Luftaustausch durch die Nebenbereiche 120b nicht möglich ist, bzw. eine besondere Ausgestaltung der Abdeckabschnitte 140 erfordert.

## Patentansprüche

1. Schutzblende (20; 120) für ein Fahrzeug, insbesondere Sonnenblende (20; 120) für ein Fahrzeugdach, wobei die Schutzblende (20; 120) als flexibles Flächengebilde (20; 120) und zur Befestigung im Bereich des Fahrzeugdachs oder eines Gepäckstauraums ausgebildet ist,
**dadurch gekennzeichnet, dass**
das flexible Flächengebilde (20; 120) als Gewirke mit
- mindestens einem Hauptbereich (20a; 120a), vorzugsweise genau einem Hauptbereich (20a; 120a), mit geringerer Elastizität und/oder Luftdurchlässigkeit und
- mindestens einem Nebenbereich (20b; 120b) einer ersten Art, vorzugsweise zwei Nebenbereichen (20b; 120b) einer ersten Art, mit höherer Elastizität und/oder Luftdurchlässigkeit als der Hauptbereich
ausgebildet ist, wobei das flexible Flächengebilde (20; 120) als Maschenware oder Webware ausgebildet ist und wobei der mindestens eine Hauptbereich (20a; 120a) und der mindestens eine Nebenbereich (20b; 120b) der ersten Art aus dem gleichen Garn mit unterschiedlicher Gewirkestruktur, insbesondere mit unterschiedlicher Maschendichte, hergestellt sind.

2. Schutzblende (20) nach Anspruch 1,
**dadurch gekennzeichnet, dass**
das flexible Flächengebilde (20) mindestens einen Nebenbereich (20c) einer zweiten Art, vorzugsweise zwei Nebenbereich (20c) einer zweiten Art mit gegenüber dem Nebenbereich (20a) der ersten Art verringerter Elastizität und/oder Luftdurchlässigkeit aufweist.

3. Schutzblende (20) nach Anspruch 2,
**dadurch gekennzeichnet, dass**
der mindestens eine Nebenbereich (20c) der zweiten Art bezüglich seiner Material- und Gewirkeigenschaften mit dem Hauptbereich (20a) übereinstimmt.

4. Schutzblende (20; 120) nach einem der vorstehenden Ansprüche, **dadurch gekennzeichnet, dass**
der mindestens eine Hauptbereich (20a; 120a) und der mindestens eine Nebenbereich (20b; 120b) der ersten Art sowie vorzugsweise der mindestens eine Nebenbereich (20c) der zweiten Art als sich in einer Auszugsrichtung (2), vorzugsweise in Fahrzeuglängsrichtung (2), erstreckende Bereiche ausgebildet sind und quer zur Auszugsrichtung (2), vorzugsweise in Fahrzeugquerrichtung (4), nebeneinander angeordnet sind.

5. Schutzblende (20; 120) nach einem der vorstehenden Ansprüche, **dadurch gekennzeichnet, dass**
das flexible Flächengebilde (20; 120) drei Bereiche (20a, 20b; 120a, 120b) aufweist, die quer zur Auszugsrichtung (2), vorzugsweise in Fahrzeugquerrichtung (4), nebeneinander angeordnet sind, wobei die zwei äußeren Bereiche (20b; 120b) Nebenbereiche (20b; 120b) erster Art sind und der innere Bereich (20a; 120a) der Hauptbereich (20a; 120a) ist.

6. Schutzblende (20) nach einem der vorstehenden Ansprüche,
**dadurch gekennzeichnet, dass**
das flexible Flächengebilde (20) fünf Bereiche (20a, 20b, 20c) aufweist, die quer zur Auszugsrichtung (2), vorzugsweise in Fahrzeugquerrichtung (4), nebeneinander angeordnet sind, wobei der mittlere Bereich (20a) der Hauptbereich (20a) ist, wobei die äußeren Bereich (20c) Nebenbereiche (20c) der zweiten Art sind und wobei die zwischen den äußeren Bereichen (20c) und dem mittleren Bereich (20a) liegenden Bereiche Nebenbereiche (20b) der ersten Art sind.

7. Schutzblende (20; 120) nach einem der vorstehenden Ansprüche, **dadurch gekennzeichnet, dass**
das flexible Flächengebilde (20; 120) zumindest im Nebenbereich (20b; 120b) erster Art aus für UV-Strahlung resistentem Garn hergestellt ist oder mit einer UV-Strahlung abweisenden Beschichtung versehen ist.

8. Schutzblendensystem (14; 114) für ein Fahrzeug, insbesondere für ein Fahrzeugdach (10) oder einen Gepäckstauraum, mit
- zwei in einer Auszugrichtung (2), vorzugsweise in Fahrzeuglängsrichtung (2), im Wesentlichen parallel verlaufenden Führungseinrichtungen (50; 152, 154) und
- einer beidseitig an den Führungseinrichtungen (50; 152, 154) geführten und quer zur Auszugrichtung, vorzugsweise in Fahrzeuglängsrichtung, verschiebbaren Schutzblende (20; 120),
**dadurch gekennzeichnet, dass**
die Schutzblende (20; 120) nach einem der Ansprüche 1 bis 7 ausgebildet ist.

9. Schutzblendensystem für ein Fahrzeug nach Anspruch 8,
**dadurch gekennzeichnet, dass**
im Bereich der Führungseinrichtungen (50; 152, 154) starre Abdeckabschnitte (40; 140) oberhalb und/oder unterhalb des flexiblen Flächengebildes (20; 120) vorgesehen sind, die sich über bzw. unter das Flächengebilde (20; 120) erstrecken.

10. Sonnenblendensystem nach Anspruch 9,
**dadurch gekennzeichnet, dass** sich
die Abdeckabschnitte (40; 140) sich über die Nebenbereiche (20b; 120b) der ersten Art des flexiblen Flächengebildes (20; 120) erstrecken und den Hauptbereich (20a; 120a) zumindest im Wesentlichen unbedeckt lassen.

11. Sonnenblendensystem nach einem der Ansprüche 8 bis 10, **gekennzeichnet durch**
eine sich quer zur Auszugsrichtung (2), vorzugsweise in Fahrzeugquerrichtung (4), erstreckende Rollowelle (30; 130) zur Aufnahme des flexiblen Flächengebildes (20; 120) in einem partiellen oder vollständigen Stauzustand.
